# EUROPEAN PATENT APPLICATION

(11) **EP 2 012 242 A1**
(43) Date of publication of application: **07.01.2009**
(21) Application number: 08102910.0
(22) Date of filing: 26.03.2008
(51) Int. Cl.: G06F 17/30

(54) **Method and formalism for sending instructions to distributed data bases carried out by means of a computer program**

(30) Priority: 27.03.2007 IT RM20070161
(71) Applicant: Universita'del Salento, 73100 Lecce (IT)
(72) Inventor: Fiore, Sandro Luigi, Galatina 73013 (IT); Cafaro, Massimo, Galatina, 73013 (IT); Aloisio, Giovanni, 73100 Lecce (IT)
(74) Representative: Cinquantini, Bruno

(57) **Abstract**

A method to send instructions to distributed Data Bases has a stage where directives are formatted in a document respecting an appropriate formalism, a stage in which the document is sent, one in which the document is interpreted and translated into basic instructions and, finally, one stage where those instructions are executed under the supervision of a Supervisor, so that the Data Producer (1) does not remain bound to supervise the results of basic transactions. Moreover, an example of formalism to be used to format the document containing the directives is also described.

## Description

### Field of the invention

The invention refers to a method and a formalism for sending instructions to distributed Data Bases carried out by means of a computer program.

### Background art

In the field of Computer Science there is from several years a certain degree of standardization regarding the formalism to be used to extract or insert data in Relational Data Bases (DBs), both commercial and Open Source. Extracting information from non-structured data banks is trickier, and requires using "wrappers", i.e., ad hoc programs to interpret textual strings.

A serious problem is related to data extraction and insertion when DBs are remote, especially when the amount of data is huge. In this case, every single request and related reply travels on the Internet, contributing to network congestion and to a general slowing down of the operations.

Another problem, important as well, is related to the heterogeneity of features among DBs of the known art.

Another problem is related to the fact that the operator needs to send the instructions to remote DBs waiting for the results of each instruction, wasting a huge amount of time. Such a mode of operation is not well suited to parallelization and, in particular, it does not allow taking advantage of scheduling optimizations that depend on both the load of the DBMS servers and on the DB architecture.

A final problem is related to converting a DB to a different one, owing to the fact that this requires writing ad hoc programs to extract data from a DB and to ingest the other one.

### Summary of the invention

The goal of this invention is to overcome all of the previous problems and to state a method for sending instructions to distrubuted DBs realized through a computer program.

A fundamental aim of the invention is to dramatically reduce the amount of data travelling on the Internet, taking advantage of the reduced congestion.

Another aim is to provide an example of a formalism to be used to format and interpret directives, i.e., high-level complex instructions coming from the operator and, in general, from the Data Producer.

Another goal of the invention is to increase the level of abstraction when coding the directives, to avoid suffering the heterogeneity among commercial, Open Source, new and obsolete DBs; in turn, this implies that converting a DB to a different one becomes immediate. Analogously, the asynchrony of transactions parallelized taking into account the scheduling done by each DB, will be no longer influential.

Another aim of the invention is to parallelize transactions over many DBs, over a single DB or over a single table, granting the coherence of basic transactions, typically in SQL.

Another aim is to demand the supervision of basic transactions to a computer equipped with related software, thus saving a huge amount of time.

Object of this invention is a method to redistribute the tasks related to transaction processing and supervising on a DB or distributed DBs, ensuring a high-level of abstraction for the Data Producer and providing an example of a formalism (hereafter called GXBL on the basis of the terms Grid relational catalog, Xml and Bulk Load) to be used to write/interpret the directives, through which it is possible to realize the method itself.

In particular, it is an object of this invention a method for sending instructions to distributed Data Bases; which provides a stage where directives are formatted in a document respecting an appropriate formalism, a stage in which the document is sent, one in which the document is interpreted and translated into basic instructions and, finally, one stage where those instructions are executed under the supervision of a Supervisor. Moreover, it is the object of this invention to provide a formalism to be used to format the documents to be sent. Finally, it is a particular object of this invention to provide a computing infrastructure allowing to realize the method, as described in the claims that are an integral part of this description.

### List of figures

Additional goals and advantages of the invention will be clear from the following detailed description, describing an embodiment of the invention itself (and of its variations), from the figures and listings of the formalism given by way of non limiting example where:

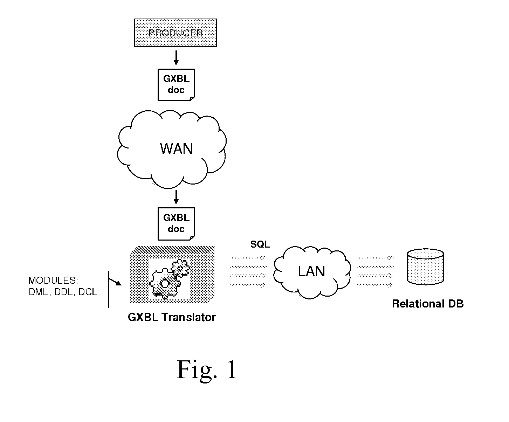

Figure 1 shows a possible scenario of usage of the method;
Figure 2 is a graphical representation of the GXBL formalism;
Figure 3 is a graphical representation of the TABLE subsection of Figure 2, putting emphasis on the DCL, DDL and DML components of the GXBL formalism;
Figure 4 is a graphical representation of the DML component of Figure 3;
Figure 5 is a relational diagram between two tables;
Figures 6 and 7 are related with the flow of data parallelized at the DB and at the table level;
Figure 8 shows the interruption of a processing step owing to the loss of a document formatted following the GXBL formalism (a GXBL document), being part of the ordered succession of a process comprising multiple GXBL documents;
Figures 9.1 and 9.2 present an example of DTD listing of the GXBL formalism;
Figures 10.1, 10.2, 10.3 and 10.4 present an example of XSD listing representing the schema of a generic GXBL document;
Figure 11 is related, as an example, to the listing corresponding to a GXBL instance in which an INSERT operation is done (DML).

### Detailed description of preferred embodiments of the invention

The method object of this invention deals with the Data Producer 1 (Producer) level requiring that directives are formatted by a translator which must be part of the Data Producer using a formalism, for instance GXBL, and sent as one or more formatted documents 2, through a generic network, for instance Internet (WAN), to the GXBL interpreter 3 (GXBL Translator), which supervises the execution of basic transactions, usually in SQL format 4, from the various DBs (relational DBs).

The GXBL Translator translates GXBL documents 2 in SQL 4, and controls the correct execution of transactions with respect to result and logical order of execution taking into account parameters and attributes composing the document that will be described in the following.

The Data Producer, once the directives are defined, can profitably do other useful work whilst a software compliant with the formalism of this invention, for instance GXBL, works as translator/sender and another one works as receiver/interpreter/supervisor.

In particular, such a translator/sender usually is part of the Data Producer, and physically it can coincide with one or more computer networks, whilst the receiver/interpreter/supervisor is a software installed on at least a computer situated on a local network connecting several, different DBs.

Moreover, the Data Producer is no longer forced to take into account the physical links to the DBs and their related tables when directives are sent to the translator.

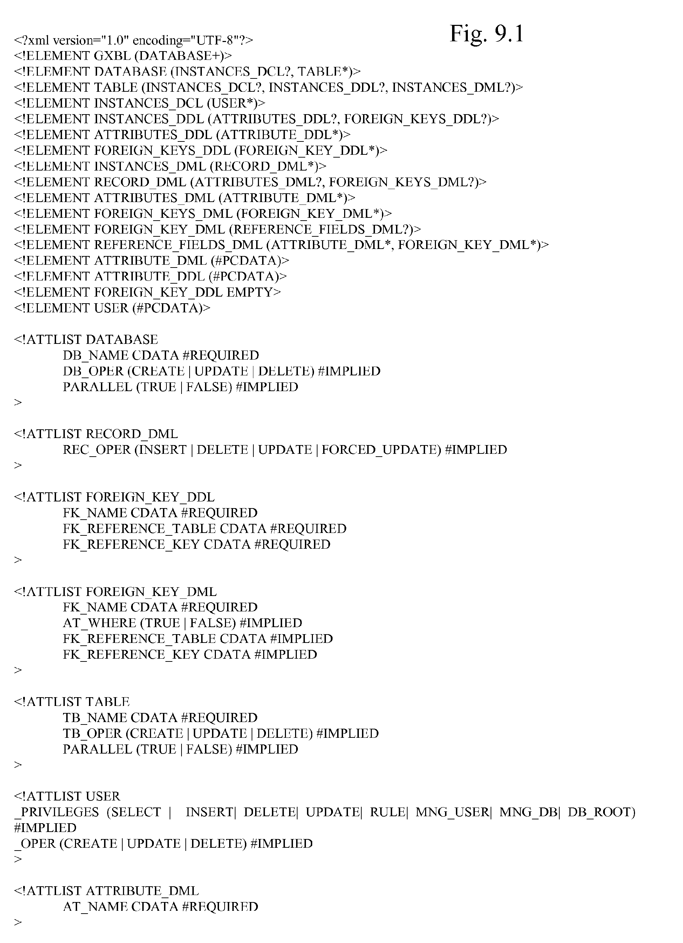

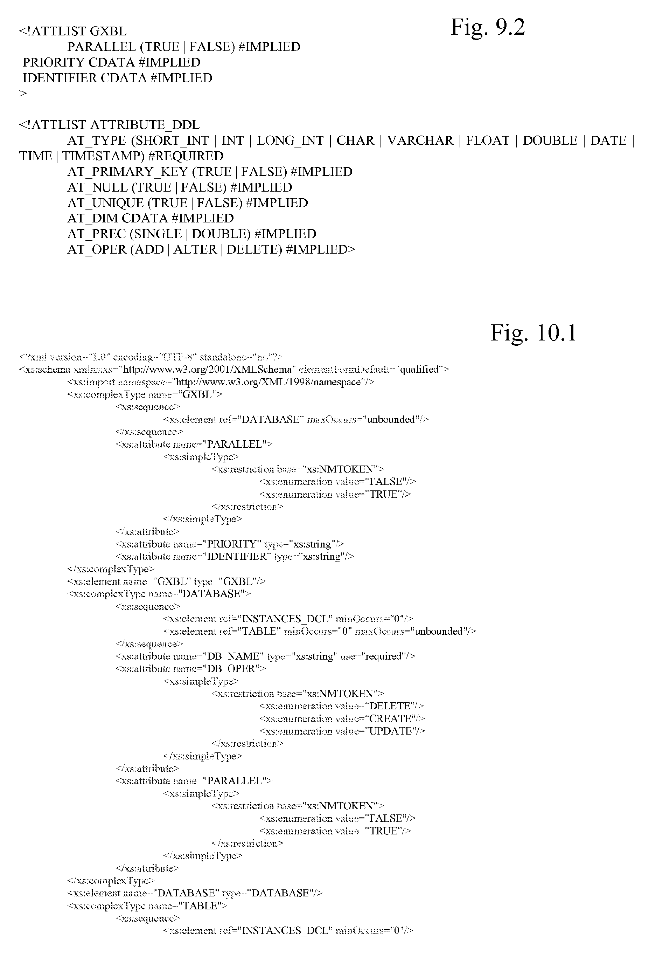

Figures 9.1 and 9.2 contain the DOCUMENT TYPE DEFINITION (DTD) of a preferred implementation of the GXBL formalism, fundamental to validate an XML document created according to the formalism.

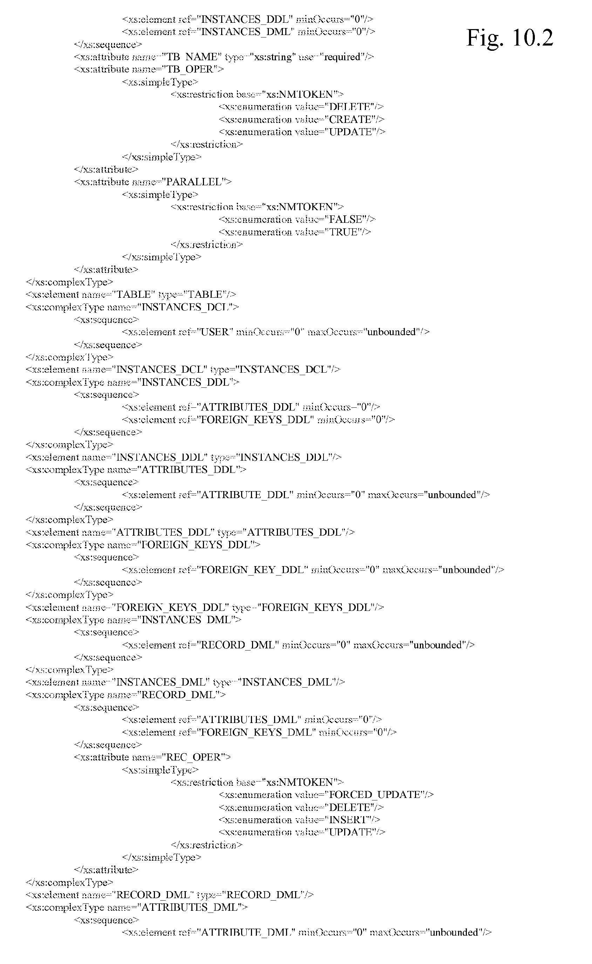

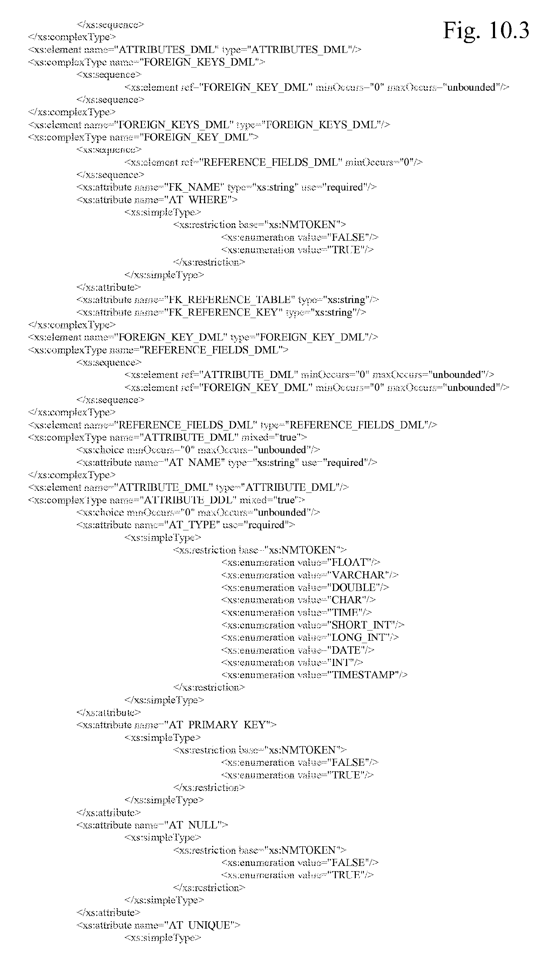

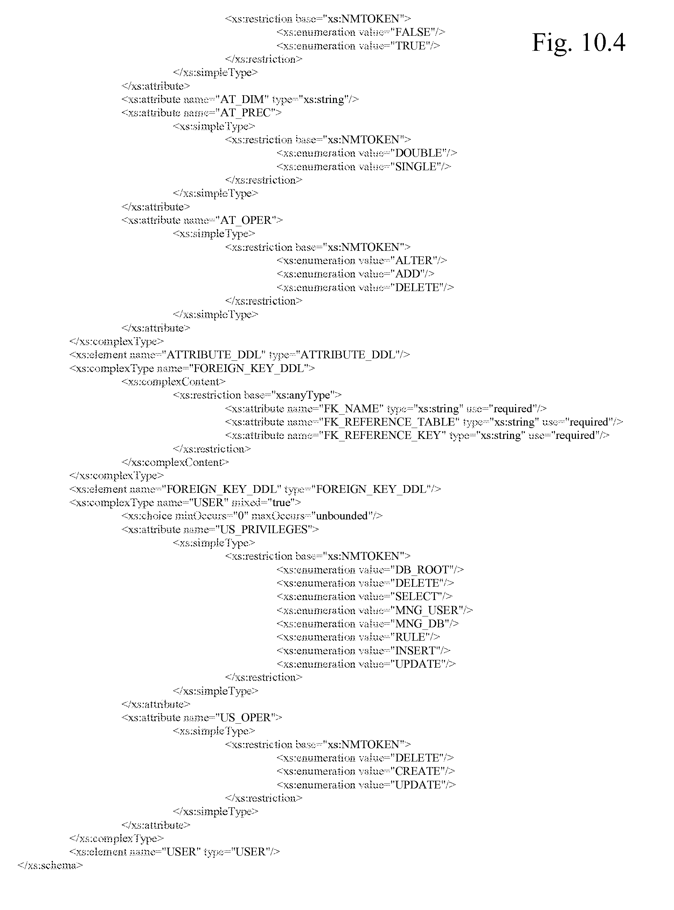

Figures 10.1, 10.2, 10.3 and 10.4 contain the XSD listing representing the schema of a generic GXBL document. It follows that GXBL documents are simply instances or objects related to the schema.

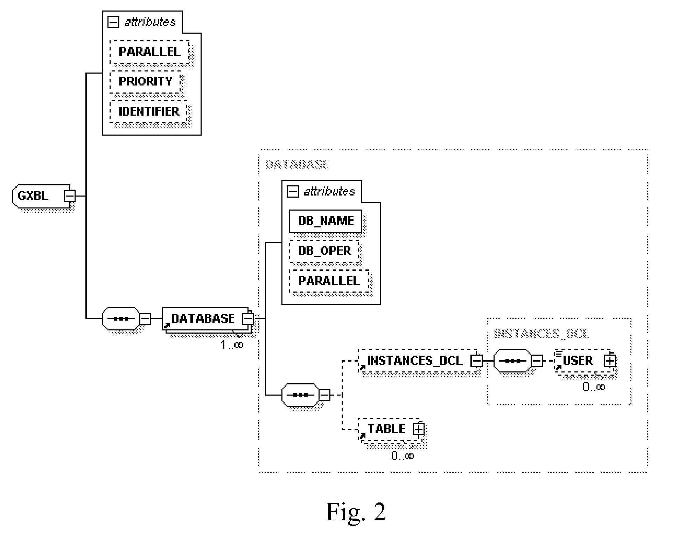

In Figure 2 it is highlighted the parameter:
● PARALLEL, regarding the GXBL document, refers to the possibility of parallelizing the operations on N DBs involved in the DATABASE sections;
● IDENTIFIER, represents a sequence number if a sequence of documents must be executed in a specific order; in particular, this attribute may assume value 0..+∞, as follows: (i) 0 for independent documents, (ii) [1.. +∞] for dependent documents, and to be interpreted according to strictly increasing values of the IDENTIFIER attribute;
● PRIORITY, different from zero if IDENTIFIER is zero provides a way to specify that a particular document must be processed before the others.

At the DB level:
● It is possible to define the users that can access a DB and their related privileges. Such information is contained in the INSTANCES_DCL subsection;
● PARALLEL refers to parallel execution of multiple subsections contained in the same document and thus referring to the same DB (DB_NAME);
● DB_OPER can assume the values CREATE, UPDATE, DELETE according to the DTD.

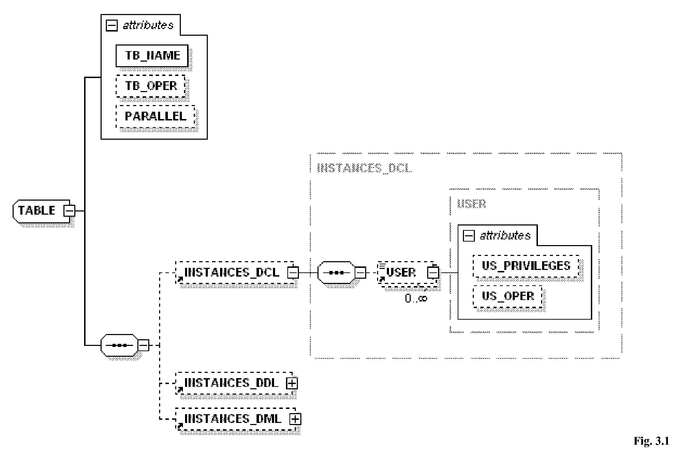

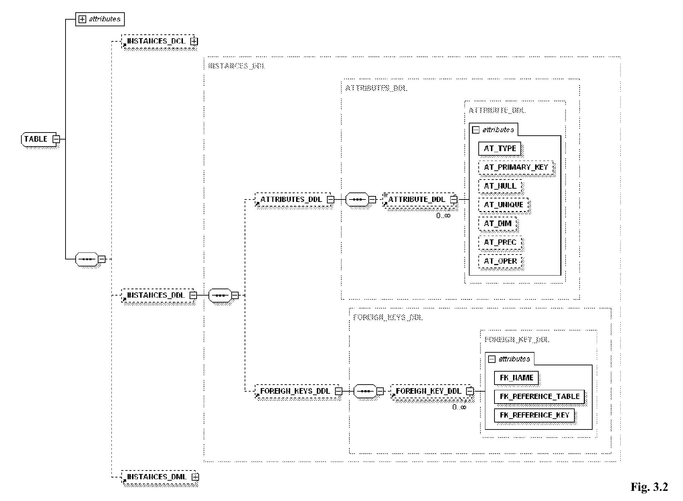

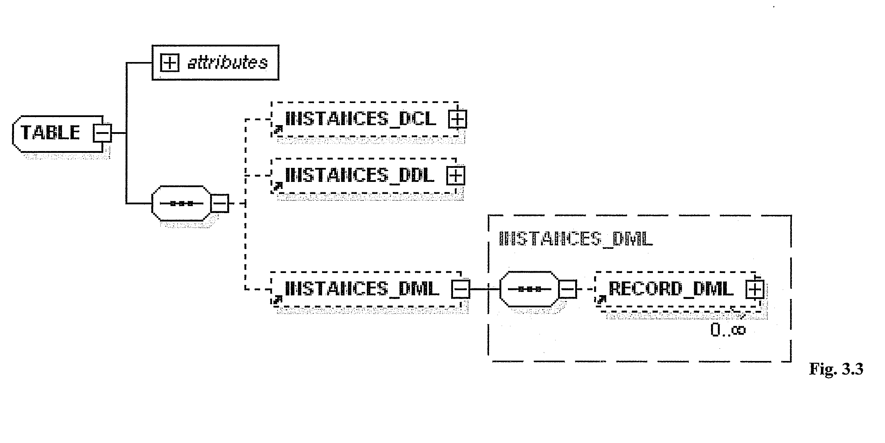

In Figure 3 it can be noted that in the TABLE section it is possible to specify the three parts INSTANCES_DML, INSTANCES_DDL and INSTANCES_DCL previously described. The INSTANCES_DCL part adds-up to the one at the upper layer, i.e., at the DB level, overwriting previous definitions and adding new ones. The INSTANCES_DDL section, in particular in the ATTRIBUTES_DDL subsection, describes the structure of a table, the attribute names, their type etc, whilst the FOREIGN_KEYS_DDL subsection describes the foreign key relations (constraints).

The INSTANCES_DML section contains N RECORD_DML subsections, one for each data manipulation operation that must be done.

In this case too, as for the hierarchical upper layers (GXBL document and DATABASE), for the TABLE element is defined the PARALLEL attribute. It is possible to set the value of the attribute to TRUE or FALSE to point out that the interpretation at "record level" of the table can happen in parallel, i.e., the interpretation can be done in parallel on *N* records.

For GXBL documents with a unique RECORD section, setting up the PARALLEL attribute in the TABLE subsection to TRUE or FALSE is not influential.

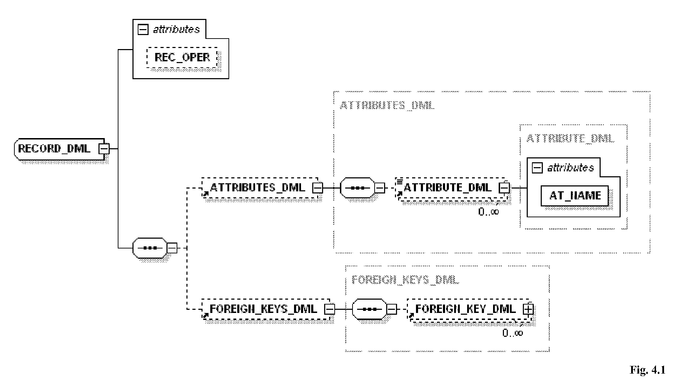

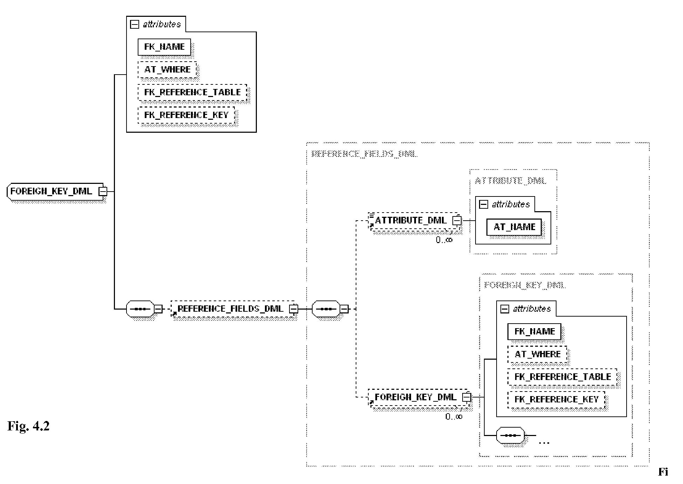

Figure 4 expands the generic RECORD_DML subsection of the previous figure, i.e., the one related to the previous upper hierarchical layer where the table to be operated on was specified. REC_OPER can assume the values (INSERT, DELETE, UPDATE, FORCED_UPDATE) according to the DTD. Within this section it is possible to identify two subsections:
- ATTRIBUTES_DML where attributes along with their data field values are inserted (those not representing external keys);
- FOREIGN_KEYS_DML where information related to logical references are inserted, i.e., the information used to retrieve the foreign key value.

It is important noting that the RECORD_DML section contains an ATTRIBUTE section but also a FOREIGN_KEYS_DML section allowing multiple levels of nested foreign keys (this feature is defined Nested_Foreign_Keys).

Physical references to DB and related tables are dealt with when the GXBL interpreter 2 interprets the documents.

In what follows, it is analyzed an example of translation from logical to physical reference. Let us suppose that there are two tables *table1* and *table2* within a relational database tied by a 1 to N relation, and suppose the user is willing to insert data into *table2.*

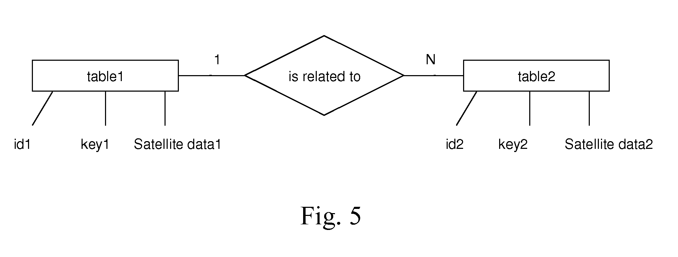

Such an example is shown in Figure 5.

In the relational model the table *table2* contains the field *idref1* which is the key external to the field *id1* of table *table1* and is not highlighted in the schema.

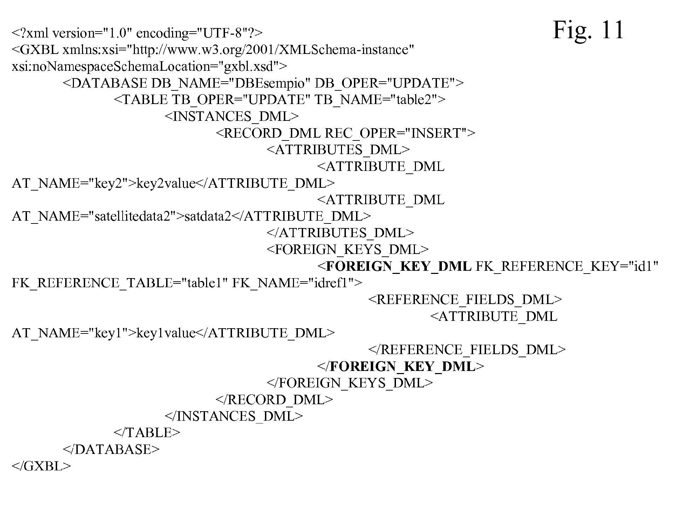

An INSERT (DML) operation in table *table2* is represented by the following GXBL instance, as shown in Figure 11.

The GXBL listing of Figure 11 is translated to the following SQL query:
*insert into table2(key2,satellitedata2,idref1) values(key2value, satdata2, **idref1);***
where **idref1** is obtained through the FOREIGN_KEYS_DML section from which the following query is obtained:
*"select id1 from table 1 where key 1 = key 1 value;*"

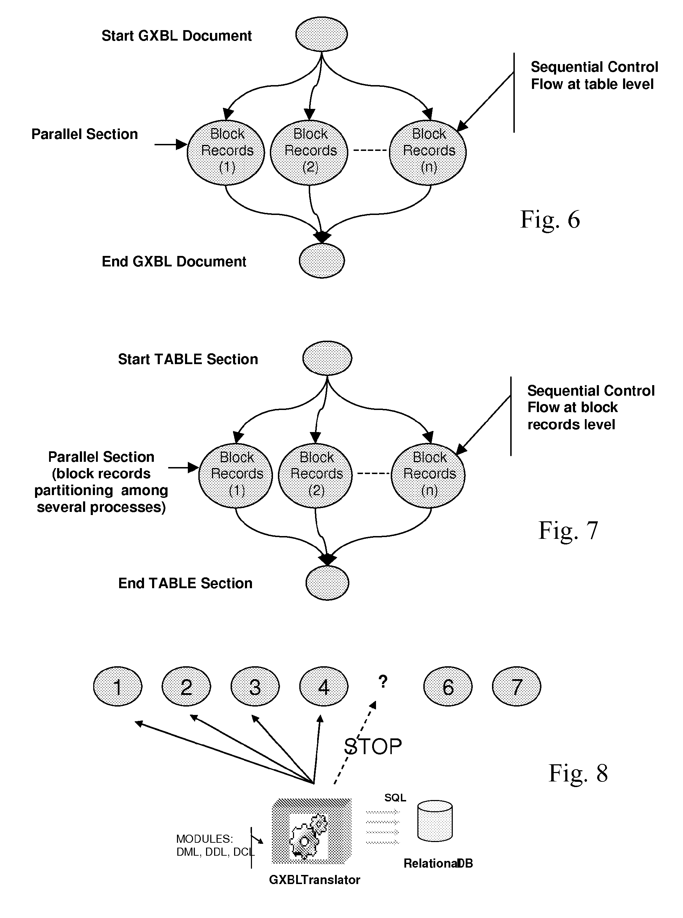

Figure 6 shows the Run Time Execution Model related to the interpretation of a GXBL document with three TABLE sections (defined as SEQUENTIAL, i.e., with the PARALLEL attribute set to FALSE) and a DATABASE section with the PARALLEL attribute set to TRUE.

As shown, on the GXBL document the interpretation of the three TABLE sections can happen in parallel. For each one, the flow is anyway sequential since the PARALLEL attribute in the TABLE subsection was set to FALSE.

Analogously, even at the TABLE level (Figure 7) it is possible to insert parallel sections by dividing N operations on records in blocks of opportune dimension, with the aim of balancing the workload on multiple processors.

The GXBL formalism therefore supports parallelizing blocks, whilst in general, GXBL interpreters could not implement this feature on the basis of the available type of license.

Another extremely important feature of the formalism is the possibility of ordering the interpretation of the GXBL documents (through sequence numbers). Sorting is made possible by the IDENTIFIER attribute of the GXBL document tag.

Using the IDENTIFIER attribute the execution strictly follows the order implied by the attribute itself, as shown in Figure 8.

The figure shows how the process of interpretation stops waiting for the arrival of the document whose identifier is 5 (even though those with identifier 6 and 7 are already available). The IDENTIFIER attribute represents a sequence number whose aim is to keep track of the last GXBL document analyzed.

The IDENTIFIER attribute makes sense when specific operations (such as the creation of a table) must be executed before others (ingestion of the table previously created), blocking, if needed, the process of interpretation until the missing document arrives.

Within the next three subsections it is reported some low level information concerning the GXBL-DDL, DML and DCL parts

### GXBL-DDL FORMALISM (DATA DEFINITION LANGUAGE)

### Attributes DATABASE

DB_NAME = string of characters
DB_OPER = enum type {CREATE, *default=UPDATE,* DELETE}

### Attributes TABLE

TB_NAME = string of characters
TB_OPER = enum type {CREATE, *default=UPDATE,* DELETE}

### Attributes ATTRIBUTE

AT_NAME= string of characters
AT_TYPE= enum type {default = INT, CHAR, VAR_CHAR, SMALL_INT, FLOAT, DOUBLE, DATE,TIME, TIMESTAMP}
AT_DIM = number of elements (useful for var_char)
AT_PREC = enum type { default = SINGLE, DOUBLE}
AT_ NULL = enum type { default = FALSE, TRUE}
AT_PRIMARY_KEY = enum type { default = FALSE, TRUE}
AT_OPER = enum type { default = ADD, DELETE, ALTER}
AT_ UNIQUE = enum type { default = FALSE, TRUE}

The (-) notation means that the attribute value is not relevant because it does not impact on the operation semantics. This means that the attribute will not be evaluated.

| **OPERATION** | **DB_OPER** | **TB_OPER** | **AT_OPER** |
|---|---|---|---|
| *DB CREATION* | CREATE | - | - |
| | | | |
| *DB_DELETE* | DELETE | - | - |
| | | | |
| *TABLE CREATION* | UPDATE | CREATE | - |
| | | | |
| *TABLE DELETE* | UPDATE | DELETE | - |
| | | | |
| *TABLE UPDATE* | UPDATE | UPDATE | ADD |
| *TABLE UPDATE* | UPDATE | UPDATE | DELETE |
| *TABLE UPDATE* | UPDATE | UPDATE | UPDATE |

### GXBL-DML FORMALISM (DATA MANIPULATION LANGUAGE)

### Attributes DATABASE:

DB_NAME = string of characters
DB_OPER = enum type {*UPDATE*}

### Attributes TABLE

TB_NAME = string of characters
TB_OPER = enum type {*UPDATE*}

### Attributes RECORD

REC_OPER = enum type {default= INSERT, UPDATE, DELETE, FORCED_UPDATE}

### Attributes ATTRIBUTE:

AT_NAME= string of characters
AT_WHERE = enum type {default=FALSE, TRUE }

The (-) notation means that the attribute value is not relevant because it does not impact on the operation semantics. This means that the attribute will not be evaluated.

Among the described attributes, within the enumerated type REC_OPER it is noteworthy the FORCED_UPDATE value, whose interpretation is the following one:
- update of the tuple for the non-key attributes, if the tuple has already been inserted;
- insert of the tuple described within the RECORD section, if the tuple under consideration does not exist.

| **OPERATION** | **REC_OPER** | **AT_WHERE** |
|---|---|---|
| *INSERT QUERY* | INSERT | - |
| | | |
| *UPDATE QUERY* | UPDATE | FALSE |
| *UPDATE QUERY* | UPDATE | TRUE |
| | | |
| *DELETE QUERY* | DELETE | FALSE |
| *DELETE QUERY* | DELETE | TRUE |
| | | |
| *FORCED_UPDATE QUERY* | FORCED_UPDATE | TRUE |
| *FORCED_UPDATE QUERY* | FORCED_UPDATE | FALSE |

### GXBL-DCL FORMALISM (DATA CONTROL LANGUAGE)

### Attributes DATABASE:

DB_NAME = string of characters
DB_OPER = enum type { *UPDATE}*

### Attributes USER

US_NAME = string of characters
US_OPER = enum type {default= INSERT, UPDATE, DELETE}
US_PRIVS = enum type {SELECT, INSERT, DELETE, UPDATE, MNG_USER, MNG_DB, DB_ROOT}

The (-) notation means that the attribute value is not relevant because it does not impact on the operation semantics. This means that the attribute will not be evaluated.

The (*) notation indicates the possibility of setting an arbitrary value among the ones possible for that attribute, combining a different semantics related to the attribute value.

| **OPERATION** | **US_OPER** | **US_PRIVS** |
|---|---|---|
| *USER INSERT* | INSERT | * |
| | | |
| *USER UPDATE* | UPDATE | * |
| | | |
| *USER DELETE* | DELETE | * |

Embodiments of the described non-limiting example are feasible, without departing from within the protection scope of the current invention, including all of the equivalent realizations by a skilled person.

It is clear that the method object of this invention allows remitting the SQL basic operation decoding to the GXBL interpreter, offering to the Data Producer a high level of abstraction, since the physical links are inferred by the interpreter itself and making immediate the conversion from a DB to another one.

On the basis of this method, the traffic on the Internet network appears drastically reduced and a high level of operation parallelism can be obtained, remitting to the GXBL interpreter the task to supervise the execution of basic transactions which must respect a precise logical order, sequential or priority based.

This invention can be profitably carried out by means of a computer software containing the conversion means to perform one or more method steps, when the program runs on a computer.

Therefore, it is intended that the protection limit is extended to such a computer program and, moreover, to means readable from computers that understand a recorded message, such means readable from computers include program coding to carry out one or more steps of the method, when such program is run on a computer.

Variants of realization of the described non-limiting example are feasible, without departing from within the protection scope of the current invention, including all of the equivalent realizations by a skilled person.

From the description reported above, the expert in the field is able to realize the invention object without introducing further constructive details.

## Claims

1. Method to send instructions to distributed DataBases including the following phases:
a. Formatting high level complex directives produced by a Data Producer (1) according to a formalism to obtain a formatted document;
b. Dispatching the formatted document (2);
c. Receiving, interpreting the formatted document by means of at least one interpreter (3) to retrieve elementary instructions;
d. Executing and supervising transactions related to the basic instructions (4) on at least a DB or table or record.

2. Method, according to claim 1, wherein the execution and supervision of the basic transactions respects the logical execution order and parameters and attributes contained within the formatted document.

3. Method, according to claim 1, wherein physical references to the DBs are inserted by such an interpreter during the computation.

4. Method, according to claim 1, wherein the formatted document contains one or more Data Base subsections.

5. Formalism to format documents, according to claim 1, wherein the formatted document contains a PARALLEL attribute, with TRUE value if the parallelization of the subsections is required.

6. Formalism, according to claim 5, wherein the formatted document contains the sequential IDENTIFIER attribute, with zero, if the document does not belong to an ordered sequence of documents, different from zero otherwise.

7. Formalism, according to claim 5, wherein the formatted document contains the PRIORITY attribute for the management of the document execution priority.

8. Formalism, according to claim 5, wherein the interpreter (3) performs the scheduling of the next document in relation to IDENTIFIER o PRIORITY parameters.

9. Formalism, according to claim 5, wherein the formatted document contains, at DB subsection level the parameters:
a. DB_OPER, with value INSERT or DELETE or UPDATE or FORCED_UPDATE;
b. DB_NAME;
c. DB_PARALLEL, with value TRUE o FALSE.

10. Formalism, according to claim 5, wherein the formatted document, at table level contains:
a. TB_OPER with value INSERT or DELETE or UPDATE or FORCED_UPDATE;
b. TB_NAME;
c. TB_PARALLEL, with value TRUE o FALSE.

11. Formalism, according to claim 5, wherein the formatted document, contains at table level the following subsections related to the DCL, DDL, DML components:
a. INSTANCE_DCL;
b. INSTANCE _ DDL;
c. INSTANCE_DML.

12. Formalism, according to claim 5, wherein the subsection INSTANCE_DCL contains at least a USER parameter including the following attributes:
a. US_PRIVILEGE;
b. US_OPER;

13. The computing infrastructure according to the claim 1, including at least a computer in which it is stored the translator/sender software suitable to carry out steps a) and b) of such a method and at least a computer on which it is installed a receiver/interpreter/supervisor suitable to perform steps c) and d).

14. Computer software including coding means suitable to perform steps of claim 1, when such software is running on more than a single computer.

15. Computer readable means including a recorded program, such a computer readable means include software coding means suitable to carry out the steps of claim 1, when such software is running on a computer.
